# EUROPÄISCHE PATENTSCHRIFT

(11) **EP 1 400 161 B1**
(45) Veröffentlichungstag und Bekanntmachung des Hinweises auf die Patenterteilung: **08.08.2007**
(21) Anmeldenummer: 03102617.2
(22) Anmeldetag: 21.08.2003
(51) Int. Cl.: A01D 41/127

(54) **System zur Erfassung von Eigenschaften von mit einer landwirtschaftlichen Erntemaschine geerntetem Erntegut**
System for measuring the properties of crop material harvested by an agricultural harvester
Système pour mesurer les qualités de la récolte moissonée par une moissoneuse

(30) Priorität: 18.09.2002 US 246217
(43) Veröffentlichungstag der Anmeldung: 24.03.2004
(73) Patentinhaber: DEERE & COMPANY, Moline, Illinois 61265-8098 (US)
(72) Erfinder: Beck, Andy Dwayne, Urbandale, IA 50322 (US); Pickett, Terence Daniel, Waukee, IA 50263 (US)
(74) Vertreter: Holst, Sönke

(56) Entgegenhaltungen:
- EP-A- 0 723 740
- US-A- 5 369 603
- US-A- 5 750 877

## Beschreibung

Die Erfindung betrifft ein System zur Erfassung von Eigenschaften von mit einer landwirtschaftlichen Erntemaschine geerntetem Erntegut, mit einem an der Erntemaschine angebrachten Sensor, der betreibbar ist, Eigenschaften von geerntetem Erntegut zu erfassen und einem zweiten, von der Erntemaschine beabstandeten Sensor, der betreibbar ist, ebenfalls die Eigenschaften des von der Erntemaschine geernteten Ernteguts zu erfassen, und mit einer Recheneinrichtung, die eine Kalibrierung der Messergebnisse des ersten Sensors durch die Messergebnisse des zweiten Sensors ermöglicht.

Mähdrescher weisen im Allgemeinen Ertragsmonitore auf, um interessierende Eigenschaften landwirtschaftlicher Produkte zu bestimmen, wenn sie geerntet werden. Ein typischer Ertragsmonitor umfasst Sensoren, wie einen Massenfluss-Sensor und einen Feuchtigkeits-Sensor. Um eine genaue Messung des Ertrags zu erhalten, müssen der Massenfluss-Sensor und der Feuchtigkeitssensor periodisch kalibriert werden. Das Verfahren der Kalibrierung eines Massenfluss-Sensors umfasst normalerweise (s. US 5 369 603 A) das Ernten von Korn, das Befüllen eines Korntransportwagens, Lastwagens oder Aufliegers und den Vergleich zwischen dem gemessenen Gewicht und einem genaueren Gewicht, das mittels eines Wägesystems oder einer Lastwagenwaage von einem Korntransportwagen gewonnen wurde.

Ein Nachteil bei den Kalibriertechniken des Stands der Technik besteht darin, dass zwischen dem Anfang und dem Ende des Kalibrierverfahrens ein beträchtlicher Zeitraum vergehen kann, wenn ein Lastwagen oder Anhänger zu einer weit entfernten Waage fährt. Außerdem könnte der Landwirt zögern, die Ernte zu unterbrechen, während er auf den Empfang der aktuellen Gewichtswerte der Kalibrierladung wartet. Während der Zeit, in der die Lastwagen vom Feld fort sind, könnten sich die Kalibrierfaktoren für den Massenfluss-Sensor beträchtlich verändern. Mit Wägesystemen ausgestattete Kornabtankwagen können verwendet werden, um einen Massenfluss-Sensor leichter und schneller manuell zu kalibrieren. Viele Abtankwagen sind jedoch nicht mit Wägesystemen ausgestattet, da letzteres ihnen keinen signifikanten Wert hinzufügt.

In jedem Fall erfordert die aktuelle Ladegewicht-Kalibrierung eine manuelle Eingabe in eine Anzeigeeinrichtung (wie eine von der Anmelderin vertriebene GreenStar-Anzeigeeinrichtung). Die manuelle Eingabe der Kalibrierinformation erfordert Arbeitszeit des Bedieners. Wenn der Bediener die Kalibrierung nicht hinreichend häufig durchführt, kann die Genauigkeit des Massenfluss-Sensors absinken, da die Beladung des Wagens auf einem größeren Durchschnitt und somit nicht auf den letzten Feldbedingungen basiert. Es wird in der Regel als zu zeitaufwändig angesehen, den Kalibrierfaktor nach jeder Beladung manuell zu aktualisieren.

Die der Erfindung zu Grunde liegende Aufgabe wird darin gesehen, das Kalibrieren der Messeinrichtung einer Erntemaschine zu vereinfachen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, Erntegut mit einer landwirtschaftlichen Erntemaschine zu ernten und Eigenschaften des Ernteguts mit einem ersten Sensor zu erfassen. Anschließend wird das Erntegut von der Erntemaschine auf ein Transportfahrzeug entladen, wo die Eigenschaften, die mit dem ersten Sensor erfasst wurden, mit einem zweiten Sensor nachgemessen werden. Eine Information über die Messwerte des zweiten Sensors wird drahtlos an eine Recheneinrichtung übertragen, die die Messwerte des zweiten Sensors zur Kalibrierung der Messwerte des ersten Sensors verwendet.

Auf diese Weise wird die Kalibrierung des ersten Sensors wesentlich vereinfacht.

Die Sensoren können beispielsweise die Feuchtigkeit oder die Gewichtskraft (Masse) des Ernteguts erfassen. Letztere kann durch Wägung des Transportfahrzeugs, auf welches das Erntegut geladen wird, oder des Ladebehälters des Transportfahrzeugs, gemessen werden. Die mit dem zweiten Sensor erfassten Daten werden durch einen Sender des Transportfahrzeugs drahtlos auf die Recheneinrichtung übertragen. Die Veranlassung der Messung und die Übertragung der Daten kann selbstständig (automatisch) veranlasst erfolgen.

In den Zeichnungen ist ein nachfolgend näher beschriebenes Ausführungsbeispiel der Erfindung dargestellt. Es zeigt:
- Fig. 1: ein Blockdiagramm eines Mähdreschers und eines Korntransportfahrzeugs, in denen die vorliegende Erfindung verwendet wird,
- Fig. 2: ein Flussdiagramm, in dem ein Verfahren zur Herstellung einer drahtlosen Verbindung zwischen einem Mähdrescher und einem Korntransportfahrzeug dargestellt ist,
- Fig. 3: ein Flussdiagramm, in dem ein Verfahren zum Hochfahren einer drahtlosen Verbindung dargestellt wird,
- Fig. 4: ein Flussdiagramm, in dem ein Verfahren zur Aufrechterhaltung einer drahtlosen Verbindung dargestellt wird,
- Fig. 5: ein Flussdiagramm, in dem ein Verfahren zum Ändern des Status eines Entladeschneckenförderers eines Mähdreschers dargestellt ist,
- Fig. 6: ein Flussdiagramm, in dem das Verfahren der Kalibrierung einer Beladung dargestellt ist,
- Fig. 7-11: stellen primär die Kalibrierung des Mähdreschers dar,

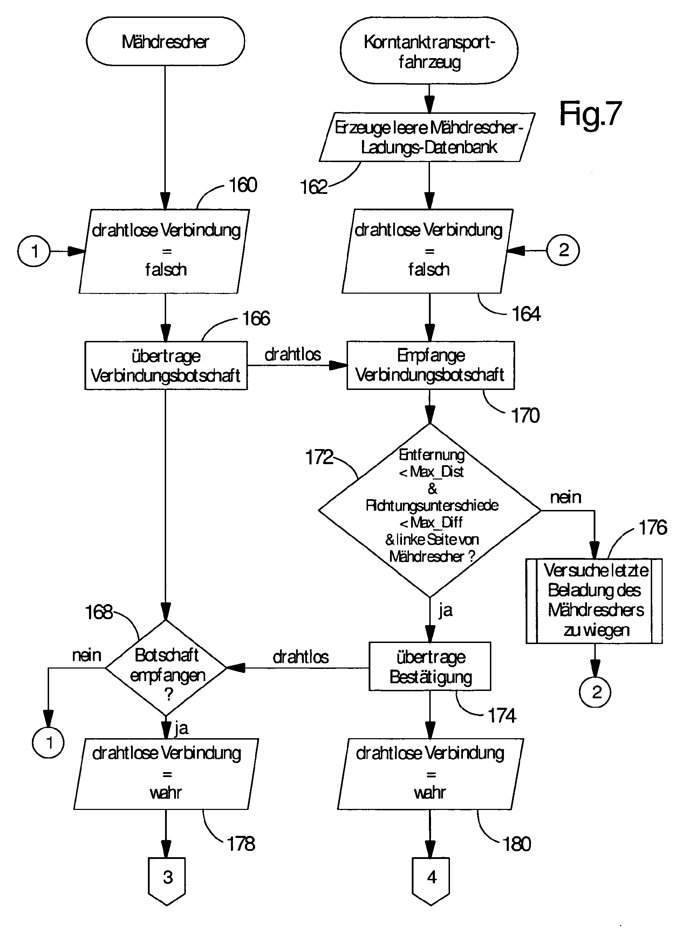

- Fig. 7: ein Flussdiagramm zur Erstellung einer drahtlosen Verbindung auf einem Mähdrescher,

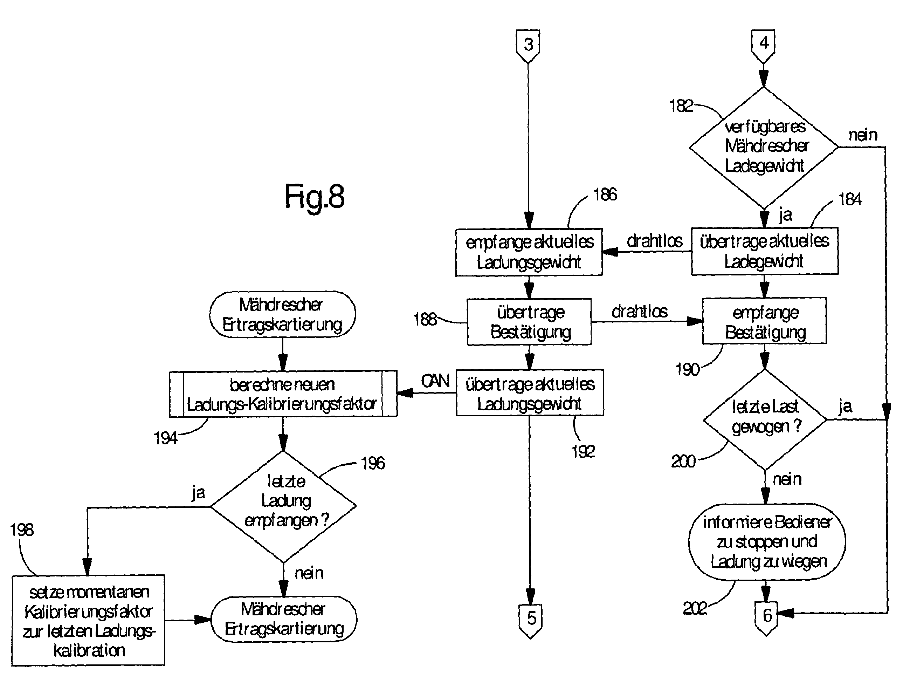

- Fig. 8: ein Blockdiagramm, in dem ein Hochfahrverfahren für eine drahtlose Verbindung auf dem Mähdrescher gezeigt wird,

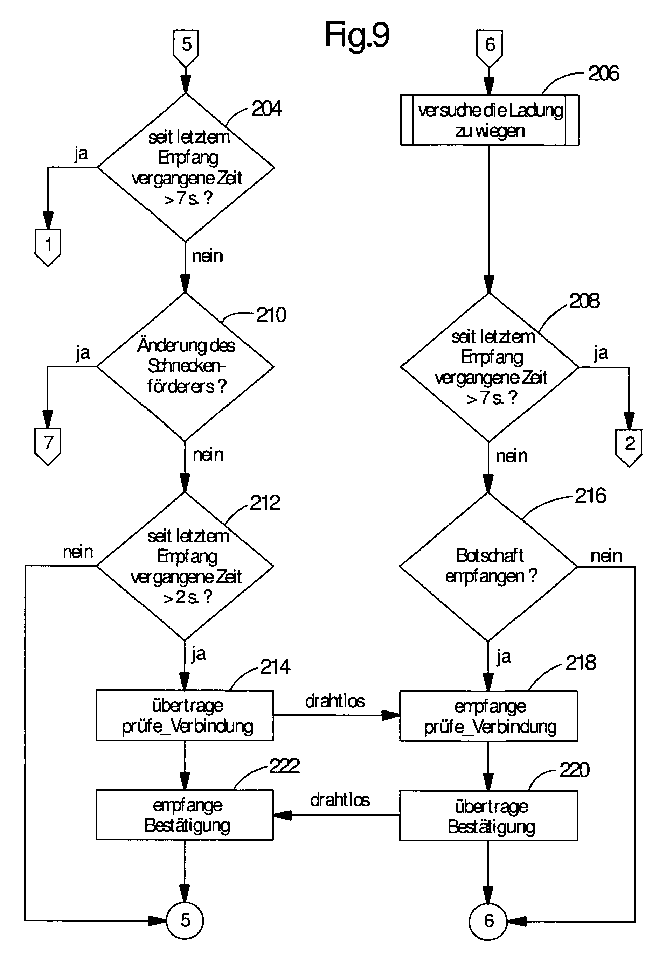

- Fig. 9: ein Flussdiagramm, das das Verfahren zur Aufrechterhaltung der Verbindung zeigt,

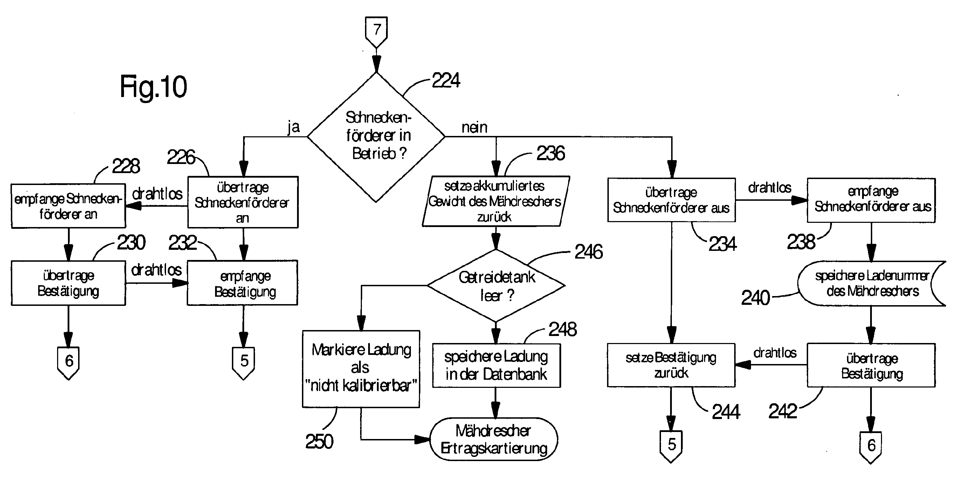

- Fig. 10: ein Flussdiagramm, in dem eine Änderung des Status des Entladeschneckenförderers des Mähdreschers gezeigt ist,

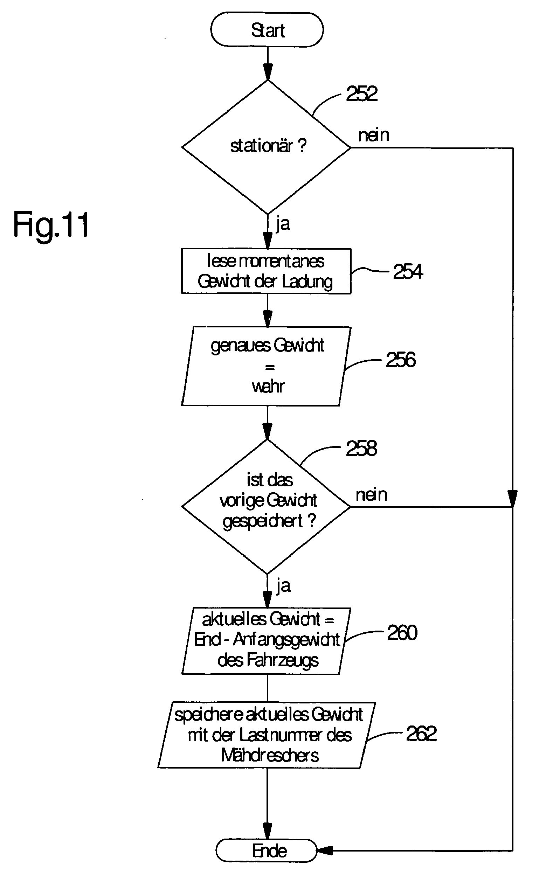

- Fig. 11: ein Flussdiagramm, in dem das Verfahren zur Wägung der letzten Beladung des Mähdreschers gezeigt ist.

Die vorliegende Erfindung stellt ein System und ein Verfahren zur beabstandeten und automatischen Kalibrierung von Sensoren bereit, wie beispielsweise des Massenfluss-Sensors in einem Ertragsmonitor eines Mähdreschers. Die Erfindung verwendet ein drahtloses Kommunikationsgerät, das auf einem Mähdrescher installiert ist und ein beabstandetes drahtloses Kommunikationsgerät. Das beabstandete drahtlose Kommunikationsgerät kann auf einem Abtankwagen installiert sein, der ein Wägesystem aufweist, einem Lastwagen oder Auflieger, oder an einem beliebigen anderen Gerät installiert sein, das Zugang zu der gewünschten Information hat.

Während des Erntens übernimmt der Ertragsmonitor Informationen vom Massenfluss-Sensor und erzeugt eine Abschätzung des Gewichts des geernteten Produkts. Sobald das aktuelle Gewicht des geernteten Produkts bekannt ist (zum Beispiel vom Wägesystem des Abtankwagens oder von einer Lastwagenwaage usw.), kann eine sich auf eine bestimmte Ladung beziehende Kalibrierinformation auf den Mähdrescher übertragen werden, wo sie verwendet werden kann, um den Massenfluss-Sensor zu rekalibrieren. Die Kalibrierinformation kann einen Kalibrierfaktor umfassen, der sich auf das aktuelle und das geschätzte Gewicht bezieht. Alternativ kann die Kalibrierinformation einfach eine Information umfassen, die sich auf das aktuelle Gewicht bezieht. In diesem Fall wird ein Kalibrierfaktor auf dem Mähdrescher ausgerechnet. Der neue Kalibrierfaktor, der auf der übertragenen Information basiert, kann auf zuvor geerntete Kornbeladungen angewandt werden, um den Ertrag zu wägen und eine genauere Darstellung des Ertrags auf dem Feld während aller Erntebedingungen zu erzielen.

In dem Fall, dass das beabstandete drahtlose Kommunikationsgerät auf einem Lastwagen oder Auflieger angebracht ist, kann die aktuelle Gewichtsinformation abgespeichert und später auf den Mähdrescher übertragen werden (z.B. wenn der Lastwagen oder Anhänger sich näher am Mähdrescher befindet).

Das automatische erfindungsgemäße Kalibrierverfahren erleichtert kontinuierliche Aktualisierungen der Kalibrierung auf einer auf den einzelnen Ladungen basierenden Basis, was eine Verminderung der Ertragsüberwachungsfehler zur Folge hat. Außerdem sind die gemessenen Erträge der geernteten Ladungen genauer, da sie die gegenwärtigen Erntebedingungen widerspiegeln, im Unterschied zu einer durchschnittlichen Bedingung, an der die letzte Kalibrierung durchgeführt wurde.

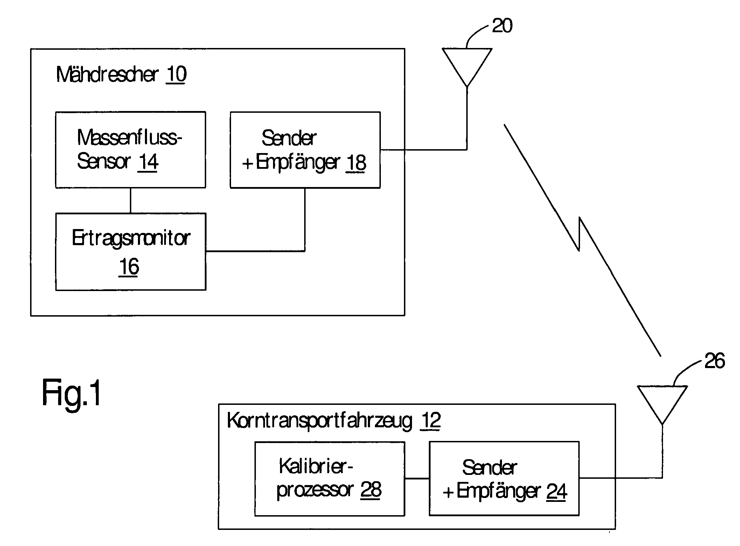

Es folgt eine Beschreibung eines Beispiels einer Implementierung der vorliegenden Erfindung. Die Figur 1 ist ein Blockdiagramm eines Mähdreschers 10 und eines Korntransportfahrzeugs 12. Das Korntransportfahrzeug 12 kann ein Abtankwagen, Lastwagen, Auflieger oder ein anderes geeignetes korntragendes Fahrzeug sein. Der Mähdrescher 10 weist als ersten Sensor einen Massenfluss-Sensor 14 auf, der mit einem eine Recheneinrichtung aufweisenden Ertragsmonitor 16 verbunden ist. Wie oben beschrieben, ist der Ertragsmonitor 16 in der Lage, ein geschätztes Gewicht des geernteten Korns basierend auf der Information des Massenfluss-Sensors 14 bereitzustellen. Es ist anzumerken, dass zu Zwecken der Klarheit verschiedene andere Sensoren und Komponenten nicht gezeigt sind. Der Ertragsmonitor 16 ist mit einem Sender und Empfänger 18 eines drahtlosen Kommunikationsgeräts verbunden, der wiederum mit einer Antenne 20 verbunden ist.

Das Korntransportfahrzeug 12 hat einen drahtlosen Sender und Empfänger 24, der mit einer Antenne 26 verbunden ist. Der drahtlose Sender und Empfänger 24 ist mit einem Kalibrierprozessor 28 verbunden, der basierend auf dem aktuellen Gewicht des Korns im Korntransportfahrzeug 12 Kalibrierinformation erzeugt. Der drahtlose Sender und Empfänger 18 des Mähdreschers 10 ist in der Lage, Informationen mit dem Sender und Empfänger 24 des Korntransportfahrzeugs 12 auszutauschen.

Wenn der Mähdrescher 10 eine Kornladung erntet, schätzt der Ertragsmonitor 16 das Gewicht der Kornladung basierend auf den Informationen vom Massenfluss-Sensor 14 ab. Nachdem geerntetes Korn auf das Korntransportfahrzeug 12 übertragen wurde, wird das Korn mittels eines zweiten Sensors gewogen, entweder durch eine Lastwagenwaage oder auf dem Korntransportfahrzeug 12, falls es Einrichtungen zur Wägung der Last aufweist. Das durch den zweiten Sensor erfasste aktuelle Gewicht des Korns wird vom Kalibrierprozessor 28 verwendet, um Kalibrierinformation zu erzeugen, die auf den Mähdrescher 10 zur Verwendung durch den Ertragsmonitor 16 zwecks Kalibrierung des Massenfluss-Sensors 14 zurückübertragen wird. Die Kalibrierinformation kann einen Kalibrierfaktor umfassen, der sich auf das aktuelle Gewicht bezieht, einen alten Kalibrierfaktor, und das vom Ertragsmonitor 16 geschätzte Gewicht. Alternativ kann die Kalibrierinformation nur das aktuelle Gewicht beinhalten.

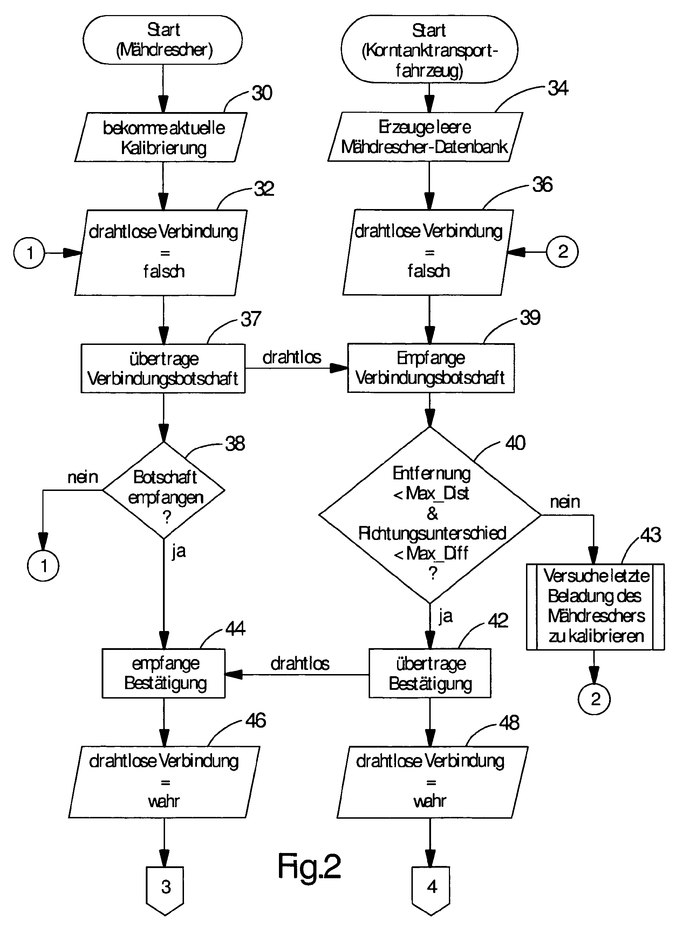

Die Figuren 2 bis 5 sind detaillierte Flussdiagramme, in denen ein Beispiel des erfindungsgemäßen Verfahrens dargestellt ist. In den Figuren 2 bis 5 werden auf dem Mähdrescher 10 durchgeführte Verfahren generell auf der linken Seite dargestellt und die im Korntransportfahrzeug 12 durchgeführten Verfahren werden auf der rechten Seite gezeigt. Die auf dem Mähdrescher 10 und dem Korntransportfahrzeug 12 ablaufenden Verfahren werden parallel ausgeführt. Es ist anzumerken, dass verschiedene Funktionen sowohl auf dem Mähdrescher 10 als auch auf dem Korntransportfahrzeug 12 ablaufen können. Die Figuren 2 bis 5 zeigen nur ein Beispiel einer Ausführungsform der Erfindung.

Die Figur 2 ist ein Flussdiagramm, in dem die Aufnahme einer drahtlosen Verbindung zwischen einem Mähdrescher 10 und einem Korntransportfahrzeug 12 illustriert wird. Auf dem Mähdrescher 10 startet das Verfahren mit dem Schritt 30, in dem der Prozess den gegenwärtigen Kalibrierfaktor auffindet. Außerdem wird im Schritt 32 eine Variable für eine drahtlose Verbindung auf "Falsch" gesetzt. Auf dem Korntransportfahrzeug 12 startet der Prozess mit dem Schritt 34, in der eine leere Mähdrescherdatenbank erzeugt wird. Es ist anzumerken, dass die Mähdrescherdatenbank Informationen für einen oder mehrere Mähdrescher enthalten kann. Außerdem wird im Schritt 36 eine Variable für eine drahtlose Verbindung auf "Falsch" gesetzt. Im Schritt 37 übersendet der Sender und Empfänger 18 des Mähdreschers 10 eine Botschaft mit der Bedeutung "Verbinde". Wenn im Schritt 38 dann festgestellt wird, dass keine Botschaft vom Korntransportfahrzeug 12 empfangen wurde, geht der Prozess wieder zum Schritt 32 zurück. Diese Schleife wird fortgeführt, bis eine Antwortbotschaft vom Korntransportfahrzeug empfangen wird.

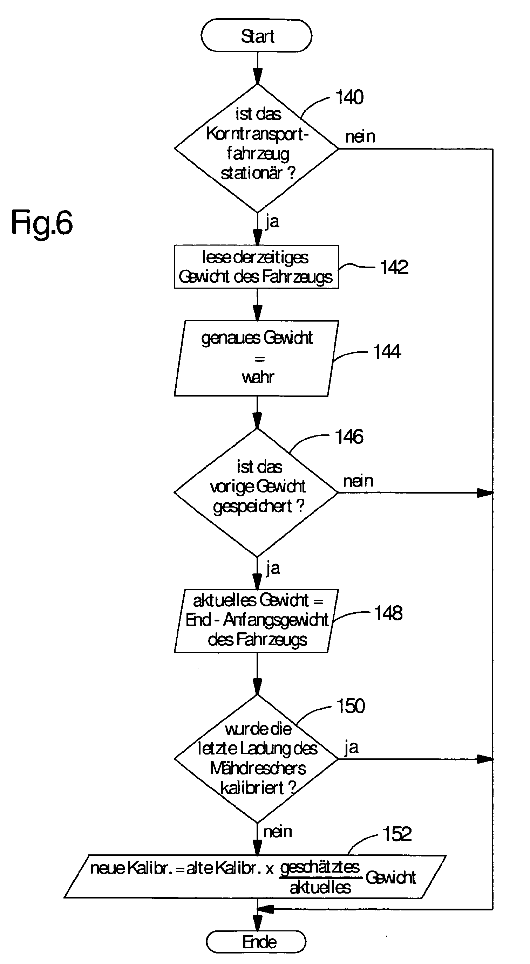

Im Schritt 39 empfängt das Korntransportfahrzeug 12 die "Verbinde"-Botschaft vom drahtlosen Sender und Empfänger 18 des Mähdreschers 10 und der Prozess geht zum Schritt 40 über. Im Schritt 40 fragt der Prozess ab, ob die Entfernung zwischen dem Korntransportfahrzeug 12 und dem Mähdrescher 10 kleiner ist als eine maximale gewünschte Entfernung (Variable Max_Dist) und ob die Richtungsdifferenz kleiner als eine maximale gewünschte Differenz (Variable Max Diff). Ist das der Fall, geht der Prozess zum Schritt 42 über, in dem ein Bestätigungssignal übersandt und (im Schritt 44) vom Mähdrescher 10 empfangen wird. Falls das aber nicht der Fall ist, geht der Prozess zum Schritt 43 über, in dem ein Versuch gemacht wird, die letzte Beladung des Mähdreschers 10 zu kalibrieren (s. Figur 6). Zu diesem Zeitpunkt wurde eine drahtlose Verbindung zwischen dem Mähdrescher 10 und dem Korntransportfahrzeug 12 hergestellt. Sowohl auf dem Mähdrescher 10 als auch auf dem Korntransportfahrzeug 12 wird die Variable für die drahtlose Verbindung auf "Wahr" gesetzt.

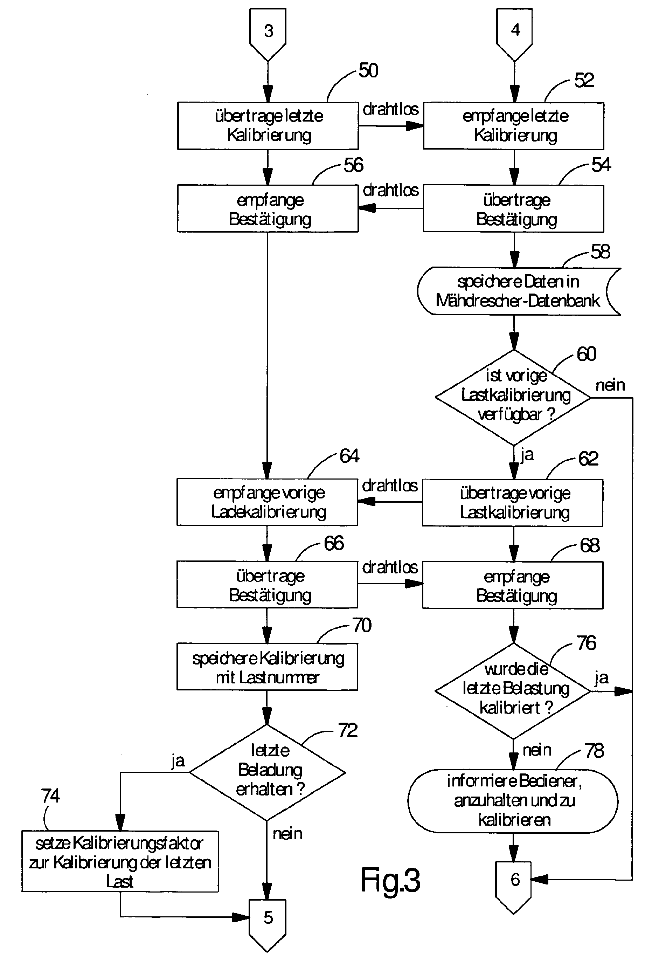

Sobald eine drahtlose Verbindung hergestellt ist, wird eine Hochfahrprozedur für eine drahtlose Verbindung gestartet. Figur 3 zeigt ein Flussdiagramm der Hochfahrprozedur für die drahtlose Verbindung. Im Schritt 50 überträgt der Mähdrescher 10 seinen letzten Kalibrierfaktor. Im Schritt 52 empfängt das Korntransportfahrzeug 12 den Kalibrierfaktor vom Mähdrescher 10. Im Schritt 54 überträgt das Korntransportfahrzeug 12 ein Bestätigungssignal, das im Schritt 56 vom Mähdrescher 10 empfangen wird. Nach der Übertragung der Bestätigung wird die empfangene Information im Schritt 58 in der Mähdrescherdatenbank abgespeichert. Danach, im Schritt 60, fragt der Prozess ab, ob die vorherige Kalibrierinformation vom Mähdrescher 10 verfügbar ist. Wenn nicht, geht der Prozess zum Schritt 82 über, der weiter unten beschrieben wird. Falls eine vorherige Kalibrierinformation vom Mähdrescher 10 verfügbar ist, geht der Prozess zum Schritt 62 über, in dem der vorherige Kalibrierfaktor auf den Mähdrescher 10 übertragen wird. Im Schritt 64 empfängt der Mähdrescher 10 den vorherigen Kalibrierfaktor. Als Reaktion überträgt der Mähdrescher 10 im Schritt 66 ein Bestätigungssignal. Das Korntransportfahrzeug 12 empfängt im Schritt 68 das Bestätigungssignal. Im Mähdrescher 10 geht der Prozess zum Schritt 70 über, in dem der empfangene Kalibrierfaktor abgespeichert und mit einer Beladungsnummer verknüpft wird. Danach, im Schritt 72, fragt der Prozess ab, ob der letzte Kalibrierfaktor empfangen wurde. Ist das der Fall, geht der Prozess auf den Schritt 74 über, in dem der Kalibrierfaktor auf den Kalibrierfaktor der letzten Beladung gesetzt wird. Auf dem Korntransportfahrzeug 12 geht der Prozess auf den Schritt 76 über, in dem abgefragt wird, ob die letzte Beladung kalibriert wurde. Falls ja, geht der Prozess auf den Schritt 82 über. Falls nicht, geht der Prozess auf den Schritt 78 über, in dem das System den Bediener informiert, anzuhalten und eine Kalibrierung durchzuführen.

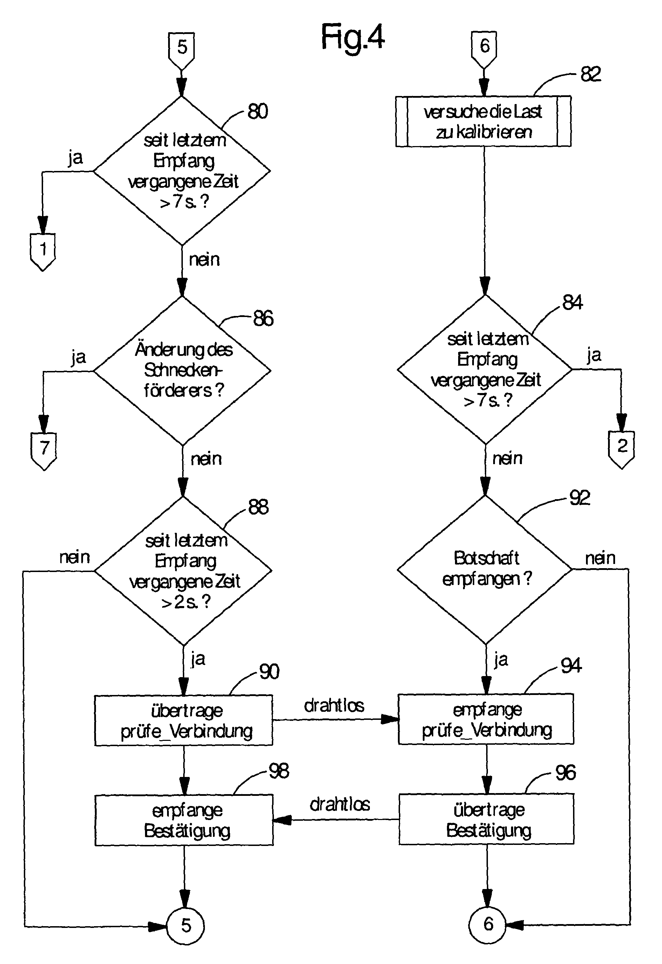

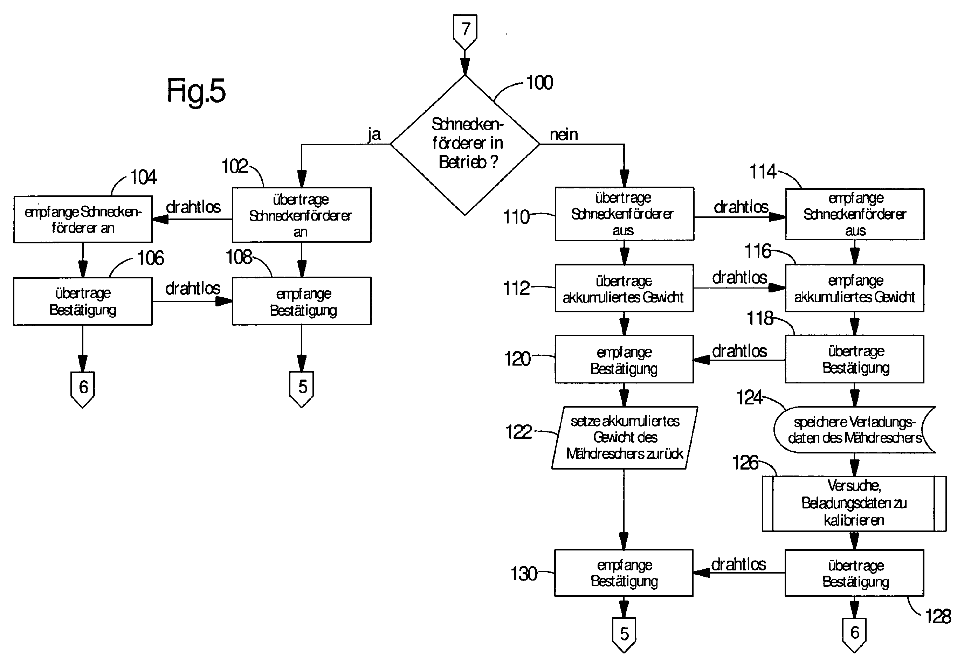

Nachdem die oben beschriebene Hochfahrprozedur für die drahtlose Verbindung abgeschlossen ist, beginnt ein Prozess, der die Verbindung aufrechterhält. Die Figur 4 ist ein Flussdiagramm einer Prozedur zur Aufrechterhaltung der Verbindung. Im Schritt 80 der Figur 4 fragt der Prozess ab, ob die seit dem letzten empfangenen Signal verstrichene Zeit größer als ein Schwellenwert ist (z. B. 7 Sekunden). Falls ja, ist festgestellt, dass die Verbindung verloren gegangen ist und der Prozess geht zurück zum Schritt 32 der Figur 2. Im Schritt 82 versucht das Korntransportfahrzeug 12, die Beladung zu kalibrieren. Der Prozess der Kalibrierung einer neuen Beladung ist unten beschrieben und in der Figur 6 dargestellt. Als nächstes, im Schritt 84, fragt der Prozess ab, ob die seit dem letzten empfangenen Signal vergangene Zeit größer als ein Schwellenwert ist (z. B. 7 Sekunden). Falls ja, ist festgestellt, dass die Verbindung verloren gegangen ist und der Prozess geht zurück zum Schritt 36 der Figur 2. Wenn ein Verbindung aufrechterhalten ist, geht der Prozess im Mähdrescher 10 in eine Schleife, bis die Verbindung verloren geht oder der Status des Entladeschneckenförderers sich geändert hat. Im Schritt 86 fragt der Prozess ab, ob sich der Status des Entladeschneckenförderers geändert hat. Falls ja, geht der Prozess auf den Schritt 100 in der Figur 5 über. Falls nicht, fragt der Prozess im Schritt 88, ob die seit der letzten Übertragung verstrichene Zeit größer als ein Schwellenwert (z. B. 2 Sekunden) ist. Falls nicht, geht der Prozess zum Schritt 80 zurück. Falls ja, geht der Prozess zum Schritt 90 über und ein "Prüfe_Verbindung"-Signal wird übertragen. Auf dem Korntransportfahrzeug 12 geht der Prozess zum Schritt 92 und fragt, ob eine Botschaft empfangen wurde. Falls nicht, geht der Prozess zum Schritt 82 zurück. Falls das Signal "Prüfe_Verbindung" im Schritt 94 empfangen wurde, wird im Schritt 96 eine Bestätigung übertragen und im Schritt 98 vom Mähdrescher empfangen. Der Prozess auf dem Korntransportfahrzeug 12 geht dann wieder zum Schritt 82 zurück.

Die Figur 5 ist ein Flussdiagramm der Prozedur der Änderung des Status des Entladeschneckenförderers. Wenn, zurück im Schritt 86, festgestellt wurde, dass sich der Status des Entladeschneckenförderers geändert hat, wird der in Figur 5 dargestellte Prozess durchgeführt. Der in Figur 5 dargestellte Prozess fängt mit dem Schritt 100 an, in dem er abfragt, ob der Entladeschneckenförderer sich im Betrieb befindet. Wenn der Entladeschneckenförderer sich im Betrieb befindet (d. h. der Mähdrescher 10 hat gerade angefangen, Korn zu entladen), geht der Prozess auf den Schritt 102 über, in dem der Mähdrescher 10 ein Signal, dass der Entladeschneckenförderer im Betrieb ist, überträgt. Im Schritt 104 empfängt das Korntransportfahrzeug 12 das Signal für den eingeschalteten Entladeschneckenförderer und überträgt ein Bestätigungssignal (Schritt 106). Im Schritt 108 empfängt der Mähdrescher 10 das Bestätigungssignal und der Prozess geht zurück auf die in Figur 4 gezeigten Schritte 80 und 82. Wenn im Schritt 100 der Entladeschneckenförderer nicht im Betrieb ist (d. h. der Mähdrescher 10 gerade aufgehört hat, Korn zu entladen), geht der Prozess zum Schritt 110 über, wo der Mähdrescher 10 ein Signal für einen abgeschalteten Entladeschneckenförderer überträgt. Zusätzlich überträgt der Mähdrescher 10 im Schritt 112 ein Signal für ein akkumuliertes Gewicht, das mit dem geschätzten Gewicht in Beziehung steht, welches vom Ertragsmonitor 16 erzeugt wurde. In den Schritten 114 und 116 empfängt das Korntransportfahrzeug 12 das Signal für den abgeschalteten Entladeschneckenförderer und das Signal für das akkumulierte Gewicht. Im Schritt 118 überträgt das Korntransportfahrzeug 12 ein Bestätigungssignal, das im Schritt 120 vom Mähdrescher 10 empfangen wird. Auf dem Mähdrescher 10 geht der Prozess zum Schritt 122 über, in dem die Variable für das im Mähdrescher 10 akkumulierte Gewicht zurückgesetzt wird. Auf dem Korntransportfahrzeug 12 geht der Prozess auf den Schritt 124 über, in dem die Beladungsdaten vom Mähdrescher 10 abgespeichert werden. Als nächstes, im Schritt 126, wird ein Versuch gemacht, die Beladung zu kalibrieren (s. Figur 6). Im Schritt 128 überträgt das Korntransportfahrzeug 12 ein Bestätigungssignal, das im Schritt 130 vom Mähdrescher 10 empfangen wird. Als nächstes geht der Prozess zurück zu den Schritten 80 und 82 der Figur 4.

Die Figur 6 ist ein Flussdiagramm, in dem der Prozess des Versuches der Kalibrierung der letzten Beladung dargestellt ist. Es ist anzumerken, dass dieser Prozess durchgeführt werden kann, bevor oder nachdem eine drahtlose Verbindung hergestellt wurde. Der Prozess beginnt im Schritt 140, wo er abfragt, ob das Korntransportfahrzeug 12 stationär ist. Falls nicht, endet der Prozess. Wenn das Korntransportfahrzeug 12 steht, geht der Prozess auf den Schritt 142 über, in dem das gegenwärtige Gewicht des Korntransportfahrzeugs 12 bzw. seiner Beladung gelesen wird. Im Fall eines Korntransportfahrzeugs 12 mit Wägefähigkeit kann das Wägesystem des Korntransportfahrzeugs 12 das Gewicht bereitstellen. Im Fall eines Korntransportfahrzeugs 12, das auf einer Lastwagenwaage gewogen wird, wird das Gewicht durch die Waage bereitgestellt. Als nächstes, im Schritt 144, wird die Variable für das genaue Gewicht auf "Wahr" gesetzt. Im Schritt 146 fragt der Prozess, ob ein vorheriges Gewicht abgespeichert ist. Falls nicht, endet der Prozess. Wenn ein vorheriges Gewicht gespeichert ist, geht der Prozess auf den Schritt 148 über, in dem die Variable für das aktuelle Gewicht auf das endgültige Gewicht minus dem anfänglichen Gewicht gesetzt wird (d. h. das aktuelle Gewicht des Korns wird berechnet, da die gemessenen Gewichte das Gewicht des Korntransportfahrzeugs 12 beinhalten). Im Schritt 150 fragt der Prozess, ob die letzte Beladung des Mähdreschers 10 kalibriert wurde. Falls ja, endet der Prozess. Wenn die letzte Beladung des Mähdreschers 10 nicht kalibriert wurde, geht der Prozess auf den Schritt 152 über, in dem ein neuer Kalibrierfaktor berechnet wird. Der neue Kalibrierfaktor wird gleich dem alten Kalibrierfaktor, multipliziert mit dem Verhältnis zwischen dem vom Mähdrescher 10 geschätzten Gewicht und dem oben berechneten aktuellen Gewicht, gesetzt. Im Schritt 152 endet der Prozess.

Im der im Folgenden wiedergegebenen Beschreibung wird die Erfindung im Kontext eines Mähdreschers beschrieben, obwohl anzumerken ist, dass die Erfindung an jedem Typ landwirtschaftlicher Produkte verwendbar ist.

Die Figuren 7 bis 11 sind Flussdiagramme, in denen ein Beispiel des Betriebs der vorliegenden Erfindung dargestellt ist, das sich primär auf die Kalibrierung eines Mähdreschers 10 bezieht.

Die Figur 7 ist ein Flussdiagramm, in dem die Aufnahme einer drahtlosen Verbindung zwischen einem Mähdrescher 10 und einem Korntransportfahrzeug 12 illustriert wird. Auf dem Mähdrescher 10 startet das Verfahren mit dem Schritt 160, in dem eine drahtlose Verbindungsvariable auf "Falsch" gesetzt wird. Auf dem Korntransportfahrzeug 12 startet der Prozess mit dem Schritt 162, in dem eine leere Mähdrescherdatenbank erzeugt wird. Außerdem wird im Schritt 164 eine Variable für eine drahtlose Verbindung auf "Falsch" gesetzt. Im Schritt 166 übersendet der Sender und Empfänger 18 des Mähdreschers 10 eine Botschaft mit der Bedeutung "Verbinde". Wenn im Schritt 168 dann festgestellt wird, dass keine Botschaft vom Korntransportfahrzeug 12 empfangen wurde, geht der Prozess wieder zum Schritt 160 zurück. Diese Schleife wird fortgeführt, bis eine Antwortbotschaft vom Korntransportfahrzeug 12 empfangen wird.

Im Schritt 170 empfängt das Korntransportfahrzeug 12 die "Verbinde"-Botschaft vom drahtlosen Sender und Empfänger 18 des Mähdreschers 10 und der Prozess geht zum Schritt 172 über. Im Schritt 172 fragt der Prozess ab, ob die Entfernung zwischen dem Korntransportfahrzeug 12 und dem Mähdrescher 10 kleiner ist als eine maximale gewünschte Entfernung (Variable Max_Dist), ob die Richtungsdifferenz kleiner als eine maximale gewünschte Differenz (Variable Max_Diff) ist, und ob es sich auf der linken Seite des Mähdreschers 10 befindet. Ist das der Fall, geht der Prozess zum Schritt 174 über, in dem ein Bestätigungssignal übersandt und (im Schritt 168) vom Mähdrescher 10 empfangen wird. Falls das nicht der Fall ist, geht der Prozess zum Schritt 176 über, in dem ein Versuch gemacht wird, die letzte Beladung des Mähdreschers 10 zu kalibrieren. Zu diesem Zeitpunkt wurde eine drahtlose Verbindung zwischen dem Mähdrescher 10 und dem Korntransportfahrzeug 12 hergestellt. Sowohl auf dem Mähdrescher 10 als auch auf dem Korntransportfahrzeug 12 wird eine Variable für eine drahtlose Verbindung auf "Wahr" gesetzt (Schritte 178 und 180).

Sobald eine drahtlose Verbindung hergestellt ist, wird eine Hochfahrprozedur für eine drahtlose Verbindung gestartet. Die Figur 8 zeigt ein Flussdiagramm der Hochfahrprozedur für den Mähdrescher 10. Im Schritt 182 fragt der Prozess ab, ob das Gewicht der Beladung des Mähdreschers 10 verfügbar ist. Wenn nicht, geht der Prozess auf den Schritt 206 (Figur 9) über, der unten beschrieben wird. Wenn das Gewicht der Beladung des Mähdreschers 10 verfügbar ist, geht der Prozess weiter zu Schritt 184 in dem das Gewicht der aktuellen Beladung auf den Mähdrescher 10 übertragen wird. Im Schritt 186 empfängt der Mähdrescher 10 das aktuelle Gewicht. Als Reaktion überträgt der Mähdrescher 10 im Schritt 188 ein Bestätigungssignal. Das Korntransportfahrzeug 12 empfängt das Bestätigungssignal im Schritt 190. Auf dem Mähdrescher 10 geht der Prozess auf den Schritt 192 über, in dem das aktuelle Gewicht der Beladung zur Verwendung in einem Ertragskartierungsprozess übertragen wird. Im Schritt 194 wird eine Routine zur Berechnung eines neuen Beladungs-Kalibrierfaktors durchgeführt, basierend auf dem aktuellen Gewicht der Beladung. Als nächstes, im Schritt 196, fragt der Prozess ab, ob die letzte Beladung empfangen wurde. Falls ja, geht der Prozess auf den Schritt 198 über, in dem der Kalibrierfaktor auf den Kalibrierfaktor der letzten Beladung gesetzt wird. Auf dem Korntransportfahrzeug 12 geht der Prozess auf den Schritt 200 über, in dem der Prozess abfragt, ob die letzte Beladung gewogen wurde. Falls ja, geht der Prozess auf den Schritt 206 über (Figur 9). Falls nicht, geht der Prozess auf den Schritt 202 über, in dem das System den Bediener informiert anzuhalten und die Beladung zu wiegen.

Nachdem die oben beschriebene Prozedur zum Hochfahren der drahtlosen Verbindung vervollständigt wurde, beginnt ein Prozess, der die Verbindung aufrechterhält. Die Figur 9 ist ein Flussdiagramm einer Prozedur zur Aufrechterhaltung der Verbindung. Im Schritt 204 fragt der Prozess ab, ob die seit dem letzten empfangenen Signal verstrichene Zeit größer als ein Schwellenwert ist (z. B. 7 Sekunden). Falls ja, ist festgestellt, dass die Verbindung verlorengegangen ist und der Prozess geht zurück zum Schritt 160 der Figur 7. Im Schritt 206 versucht das Korntransportfahrzeug 12, die Beladung zu wiegen. Als nächstes, im Schritt 208, fragt der Prozess ab, ob die seit dem letzten empfangenen Signal vergangene Zeit größer als ein Schwellenwert ist (z. B. 7 Sekunden). Falls ja, ist festgestellt, dass die Verbindung verlorengegangen ist und der Prozess geht zurück zum Schritt 164 der Figur 7. Wenn eine Verbindung aufrechterhalten ist, geht der Prozess im Mähdrescher 10 durch eine Schleife, bis die Verbindung verloren geht oder der Status des Entladeschneckenförderers sich geändert hat. Im Schritt 210 fragt der Prozess ab, ob sich der Status des Entladeschneckenförderers geändert hat. Falls ja, geht der Prozess auf den Schritt 224 in der Figur 10 über. Falls nicht, fragt der Prozess im Schritt 212, ob die seit der letzten Übertragung verstrichene Zeit größer als ein Schwellenwert (z. B. 2 Sekunden) ist. Falls nicht, geht der Prozess zum Schritt 204 zurück. Falls ja, geht der Prozess zum Schritt 214 über und ein "Prüfe_Verbindung"-Signal wird übertragen. Auf dem Korntransportfahrzeug 12 geht der Prozess zum Schritt 216 und fragt, ob eine Botschaft empfangen wurde. Falls nicht, geht der Prozess zum Schritt 206 zurück. Falls das Signal "Prüfe_Verbindung" im Schritt 218 empfangen wurde, wird im Schritt 220 eine Bestätigung übertragen und im Schritt 222 vom Mähdrescher 10 empfangen. Der Prozess auf dem Korntransportfahrzeug 12 geht dann wieder zum Schritt 206 zurück.

Die Figur 10 ist ein Flussdiagramm der Prozedur der Änderung des Status des Entladeschneckenförderers. Wenn, zurück im Schritt 210, festgestellt wurde, dass sich der Status des Entladeschneckenförderers geändert hat, wird der in Figur 10 dargestellte Prozess durchgeführt. Der in Figur 10 dargestellte Prozess fängt mit dem Schritt 224 an, in dem er abfragt, ob der Entladeschneckenförderer sich im Betrieb befindet. Wenn der Entladeschneckenförderer sich im Betrieb befindet (d. h. der Mähdrescher 10 hat gerade angefangen, Korn zu entladen), geht der Prozess auf den Schritt 226 über, in dem der Mähdrescher 10 ein Signal, dass der Entladeschneckenförderer im Betrieb ist, überträgt. Im Schritt 228 empfängt das Korntransportfahrzeug 12 das Signal für den eingeschalteten Entladeschneckenförderer und überträgt ein Bestätigungssignal (Schritt 230). Im Schritt 232 empfängt der Mähdrescher 10 das Bestätigungssignal und der Prozess geht zurück auf die in Figur 9 gezeigten Schritte 204 und 206. Wenn im Schritt 224 der Entladeschneckenförderer nicht im Betrieb ist (d. h. der Mähdrescher 10 gerade aufgehört hat, Korn zu entladen), geht der Prozess zu den Schritten 234 und 236 über, in denen der Mähdrescher 10 ein Signal für einen abgeschalteten Entladeschneckenförderer überträgt und die Variable für das im Mähdrescher 10 angesammelte oder akkumulierte Gewicht zurückgesetzt wird. Im Schritt 238 empfängt das Korntransportfahrzeug 12 das Signal für den abgeschalteten Entladeschneckenförderer und speichert im Schritt 240 die Nummer der Beladung des Mähdreschers 10. Im Schritt 242 überträgt das Korntransportfahrzeug 12 ein Bestätigungssignal, das im Schritt 244 vom Mähdrescher 10 empfangen wird. Danach geht der Prozess auf die Schritte 204 und 206 der Figur 9 über, in denen ein Versuch unternommen wird, das Gewicht der Beladung zu wiegen. Im Schritt 246 fragt der Prozess, ob das Korntransportfahrzeug 12 leer ist. Falls ja, geht der Prozess zum Schritt 248 über, in dem die Beladung in der Datenbank abgespeichert wird. Falls nein, geht der Prozess auf den Schritt 250 über, in dem die Beladung als "nicht zum Kalibrieren in der Lage" gekennzeichnet wird. Der Prozess geht dann zur Ertragskartierungsroutine des Mähdreschers 10 über.

Die Figur 11 ist ein Flussdiagramm, in dem der Prozess des Versuches des Wägens der letzten Beladung des Mähdreschers 10 dargestellt ist. Der Prozess beginnt im Schritt 252, in dem er abfragt, ob das Korntransportfahrzeug 12 stationär ist. Falls nicht, endet der Prozess. Wenn das Korntransportfahrzeug 12 steht, geht der Prozess auf den Schritt 254 über, in dem das gegenwärtige Gewicht des Korntransportfahrzeugs 12 gelesen wird. Als nächstes, im Schritt 256, wird die Variable für das genaue Gewicht auf "Wahr" gesetzt. Im Schritt 258 fragt der Prozess, ob ein vorheriges Gewicht abgespeichert ist. Falls nicht, endet der Prozess. Wenn ein vorheriges Gewicht gespeichert ist, geht der Prozess auf den Schritt 260 über, in dem die Variable für das aktuelle Gewicht auf das endgültige Gewicht minus dem anfänglichen Gewicht gesetzt wird (d. h. das aktuelle Gewicht des Korns wird berechnet, da das gemessene Gewicht das Gewicht des Korntransportfahrzeugs 12 beinhaltet). Im Schritt 262 wird das aktuelle Gewicht gemeinsam mit der Nummer der Beladung des Mähdreschers 10 gespeichert und der Prozess endet.

Während die vorliegende Erfindung im Kontext eines Massenfluss-Sensors 14 eines Mähdreschers 10 beschrieben wurde, könnte die Erfindung auch auf andere Weise benutzt werden. Beispielsweise könnte die Erfindung zum Kalibrieren anderer Sensoren, wie einem Feuchtesensor, verwendet werden. Außerdem könnte die Information aus anderen Quellen kommen. So könnte ein Elevator Kalibrierinformationen an Mähdrescher übersenden, nachdem Korn gewogen wurde, dass zum Elevator verbracht wurde.

## Patentansprüche

1. System zur Erfassung von Eigenschaften von mit einer landwirtschaftlichen Erntemaschine (10) geerntetem Erntegut, mit einem an der Erntemaschine (10) angebrachten Sensor (14), der betreibbar ist, Eigenschaften von geerntetem Erntegut zu erfassen und einem zweiten, von der Erntemaschine (10) beabstandeten Sensor, der betreibbar ist, ebenfalls die Eigenschaften des von der Erntemaschine (10) geernteten Ernteguts zu erfassen, und mit einer Recheneinrichtung (16), die eine Kalibrierung der Messergebnisse des ersten Sensors (14) durch die Messergebnisse des zweiten Sensors ermöglicht, **dadurch gekennzeichnet, dass** der zweite Sensor an einem von der Erntemaschine (10) mit Erntegut befüllbaren Transportfahrzeug (12) angeordnet ist und dass Mittel (20, 26) zur drahtlosen Übertragung einer die Messergebnisse des zweiten Sensors enthaltenden Information auf die Recheneinrichtung (16) vorhanden sind.

2. System nach Anspruch 1, **dadurch gekennzeichnet, dass** die Sensoren zur Erfassung der Feuchtigkeit und/oder Gewichtskraft des Ernteguts eingerichtet sind.

3. System nach Anspruch 2, **dadurch gekennzeichnet, dass** der zweite Sensor zur Wägung des Transportfahrzeugs (12) und/oder seiner Beladung eingerichtet ist.

4. System nach Anspruch 3, **dadurch gekennzeichnet, dass** sich auf dem Transportfahrzeug (12) ein Sender befindet, mit dem die Daten des zweiten Sensors zur Recheneinrichtung (16) übertragbar sind.

5. System nach einem der vorhergehenden Ansprüche, **dadurch gekennzeichnet, dass** die Veranlassung der Messung durch den zweiten Sensor und/oder die Übertragung der Daten auf die Recheneinrichtung (16) selbstständig veranlasst erfolgt.

6. System nach einem der vorhergehenden Ansprüche, **dadurch gekennzeichnet, dass** ein Messwert des zweiten Sensors abspeicherbar ist, wenn sich der zweite Sensor in einem größeren Abstand von der Recheneinrichtung befindet, und dass der Messwert später auf die Recheneinrichtung übertragbar ist, wenn sich ein Speicher, der den zweiten Messwert enthält, näher an der Recheneinrichtung befindet.

## Claims

1. System for measuring the properties of crop material harvested by an agricultural harvester (10), said system having a sensor (14), which is fitted to the harvester (10) and can be operated to measure the properties of harvested crop material, and a second sensor, which is at a distance from the harvester (10) and can be operated to likewise measure the properties of the crop material harvested by the harvester (10), and having a computing device (16) which makes it possible to calibrate the measurement results from the first sensor (14) using the measurement results from the second sensor, **characterized in that** the second sensor is arranged on a transportation vehicle (12) which can be filled with crop material by the harvester (10), and **in that** means (20, 26) are provided for wirelessly transmitting an item of information, which contains the measurement results from the second sensor, to the computing device (16).

2. System according to Claim 1, **characterized in that** the sensors are set up to measure the moisture and/or the force of the weight of the crop material.

3. System according to Claim 2, **characterized in that** the second sensor is set up to weigh the transportation vehicle (12) and/or its load.

4. System according to Claim 3, **characterized in that** a transmitter which can be used to transmit the data from the second sensor to the computing device (16) is situated on the transportation vehicle (12).

5. System according to one of the preceding claims, **characterized in that** the measurement by the second sensor and/or the transmission of the data to the computing device (16) is/are independently induced.

6. System according to one of the preceding claims, **characterized in that** a measured value from the second sensor can be stored if the second sensor is at a greater distance from the computing device, and **in that** the measured value can be subsequently transmitted to the computing device if a memory containing the second measured value is closer to the computing device.

## Revendications

1. Système pour déterminer les propriétés des végétaux récoltés par une machine de récolte (10) agricole, comportant un capteur (14), qui est disposé sur la machine de récolte (10) et qui est destiné à être utilisé pour mesurer les propriétés des végétaux récoltés, et un deuxième capteur, qui est écarté de la machine de récolte (10) et qui est également destiné à être utilisé pour mesurer les propriétés des végétaux récoltés, et comportant un dispositif de traitement de données (16) qui permet un calibrage des résultats de mesure du premier capteur (14) par les résultats de mesure du deuxième capteur, **caractérisé en ce que** le deuxième capteur est disposé sur un véhicule de transport (12) destiné à être chargé par la machine de récolte (10) avec les produits récoltés, et **en ce que** des moyens (20, 26) pour la transmission sans fil d'une information contenant les résultats de mesure du deuxième capteur sont prévus sur le dispositif de traitement de données (16).

2. Système selon la revendication 1, **caractérisé en ce que** les capteurs sont conçus pour mesurer l'humidité et/ou le poids des végétaux récoltés.

3. Système selon la revendication 2, **caractérisé en ce que** le deuxième capteur est conçu pour la pesée du véhicule de transport (12) et/ou sa charge.

4. Système selon la revendication 3, **caractérisé en ce qu'**un émetteur, qui permet de transmettre les données du deuxième capteur vers le dispositif de traitement de données (16), est situé sur le véhicule de transport (12).

5. Système selon l'une quelconque des revendications précédentes, **caractérisé en ce que** l'initiative de la mesure par le deuxième capteur et/ou la transmission des données vers le dispositif de traitement de données (16) sont ordonnées de manière autonome.

6. Système selon l'une quelconque des revendications précédentes, **caractérisé en ce qu'**une valeur de mesure du deuxième capteur peut être stockée en mémoire lorsque le deuxième capteur est situé à une distance relativement grande du dispositif de traitement de données, et **en ce que** la valeur de mesure peut être transmise ultérieurement vers le dispositif de traitement de données lorsqu'une mémoire contenant la deuxième valeur de mesure se situe à proximité du dispositif de traitement de données.
